# EUROPEAN PATENT APPLICATION

(11) **EP 3 437 486 A1**
(43) Date of publication of application: **06.02.2019**
(21) Application number: 18185654.3
(22) Date of filing: 26.07.2018
(51) Int. Cl.: A23L 3/26, A21C 13/00, A21D 8/02, A21D 8/04, A21D 15/06

(54) **SYSTEM AND METHOD FOR REDUCING PROOFING TIME OF DOUGH AND CONTROLLING GROWTH OF MICROORGANISMS IN THE PROOFING SYSTEM**

(30) Priority: 03.08.2017 FI 20175710
(71) Applicant: S1 Sähkö Oy, 24910 Halikko as. (FI)
(72) Inventor: Nummenpalo, Mika, 24280 Salo (FI); Jauhiainen, Petteri, 24280 Salo (FI); Koivula, Jarno, 20300 Turku (FI); Leino, Maria, 20300 Turku (FI); Huhtinen, Niko, 20740 Turku (FI); Jokinen, Jyrki, 13430 Hämeenlinna (FI); Nyqvist, Niila, 20520 Turku (FI)
(74) Representative: Suominen, Kaisa Liisa

(57) **Abstract**

The present invention relates to a system for reducing proofing time of dough and controlling growth of microorganisms in a proofing system, the system comprising a proofing cabinet (102, 202) comprising at least one light source (104, 204) for radiating blue light at a wavelength that ranges between 400 to 480 nanometres to stimulate baking yeast in the dough for reducing the proofing time and to control the growth of microorganisms. The system comprises reflective surfaces (106, 206) on an interior surface of the proofing cabinet, wherein the reflective surfaces provide a uniform blue light inside the proofing cabinet; a humidifier (108, 208) that supplies steam for maintaining a relative humidity inside the proofing cabinet that ranges between 60 to 95 percent; and a microcontroller (218) that is communicatively connected to the at least one light source and the humidifier, wherein the microcontroller is configured to adjust the intensity of the blue light to disinfect the proofing cabinet based on light sensor data measured from the disinfected surface of the proofing cabinet, wherein the intensity of the blue light inside the proofing cabinet is maintained at between 10 to 120 milliwatts per square centimetre during the disinfection cycle.

## Description

### TECHNICAL FIELD

The present disclosure relates generally to a dough proofing system, and more specifically, to a system and a method for reducing the proofing time of dough and for controlling growth of microorganisms in the proofing system.

### BACKGROUND

Proofing refers to a final rise of shaped bread dough before baking. Proofing happens during a specific rest period within the more generalized process known as fermentation. Fermentation is a step in creating yeast breads and baked goods where the yeast is allowed to leaven the dough. Fermentation typically begins when viable baker's yeast or a starter culture is added to flour and water. Enzymes in the flour and the yeast create sugars, which are consumed by the yeast, which in turn produce carbon dioxide and alcohol. A proofing oven is a standard equipment in commercial kitchens and factories. The proofing oven is a big metal cabinet with racks or a conveyor for trays of dough (e.g. used to make rolls, doughnuts and loaves of bread). The proofing oven maintains a warm and moist environment for yeast to prosper and create perfectly risen baked goods. In traditional proofing ovens, the baking yeast is activated when hot water is mixed with the dough in a temperature range of 35 to 42 degree Celsius.

In one approach for proofing, *Saccharomyces cerevisiae* (i.e. yeast) is activated using light, however it affects cell growth and ethanol formation of *Saccharomyces cerevisiae.* For example, red light at a wavelength of 630 nanometre can be used stimulate cell growth of yeast. However, this slightly inhibits ethanol formation. Further, existing methods for the activation of *Saccharomyces cerevisiae* using light fail to control growth of micro-organisms in the proofing cabinet and/or dough.

Therefore, in light of the foregoing discussion, there exists a need to overcome the aforementioned drawbacks in existing proofing ovens and methods due to their limitations in controlling growth of micro-organisms in the dough and the proofing cabinet while activating the yeast.

### SUMMARY

The present disclosure provides a system for reducing proofing time of dough and controlling growth of micro-organisms in proofing system, the system comprising a proofing cabinet. The proofing cabinet comprises at least one light source for radiating blue light at a wavelength that ranges between 400 to 480 nanometres to stimulate baking yeast in the dough for reducing the proofing time and to control the growth of microorganisms. The system further comprises
- reflective surfaces on an interior surface of the proofing cabinet, wherein the reflective surfaces provide a uniform blue light inside the proofing cabinet;
- a humidifier that supplies steam for maintaining a relative humidity inside the proofing cabinet that ranges between 60 to 95 percent; and
- a microcontroller that is communicatively connected to the at least one light source and the humidifier, wherein the microcontroller is configured to adjust the intensity of the blue light to disinfect the proofing cabinet based on light sensor data measured from the disinfected surface of the proofing cabinet, wherein the intensity of the blue light inside the proofing cabinet is maintained at between 10 to 120 milliwatts per square centimetre during the disinfection cycle.

The present disclosure also provides a method for reducing proofing time of dough and controlling growth of microorganisms in a proofing system, the method comprising
- radiating blue light at a wavelength that ranges between 400 to 480 nanometres, using at least one light source;
- providing uniform blue light inside the proofing cabinet, using reflective su rfaces;
- supplying steam for maintaining a relative humidity inside the proofing cabinet between 60 to 95 percent, using a humidifier; and
- adjusting the intensity of the blue light to disinfect the proofing cabinet based on the light sensor data measured from the disinfected surface of the proofing cabinet during a disinfection cycle, using a microcontroller, wherein the intensity of the blue light inside the proofing cabinet is maintained at between 10 to 120 milliwatts per square centimetre during the disinfection cycle.

Embodiments of the present disclosure substantially eliminate or at least partially address the aforementioned problems in the prior art due to their limitations in controlling growth of microbes in the proofing system or proofing cabinet, while activating the backing yeast.

Additional aspects, advantages, features and objects of the present disclosure are made apparent from the drawings and the detailed description of the illustrative embodiments construed in conjunction with the appended claims that follow.

It will be appreciated that features of the present disclosure are susceptible to being combined in various combinations without departing from the scope of the present disclosure as defined by the appended claims.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those in the art will understand that the drawings are not to scale. Wherever possible, like elements have been indicated by identical numbers.

Embodiments of the present disclosure will now be described, by way of example only, with reference to the following diagrams wherein:
FIG. 1 is a schematic illustration of a system in accordance with an embodiment of the present disclosure;
FIG. 2 is a schematic illustration of a system that comprises a microcontroller and a server in accordance with an embodiment of the present disclosure; and
FIG. 3 is a flow diagram illustrating a method of reducing proofing time of dough and controlling growth of microorganisms in the proofing system, in accordance with an embodiment of the present disclosure.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practicing the present disclosure are also possible.

The present disclosure provides a system for reducing proofing time of dough and controlling growth of micro-organisms in proofing system, the system comprising a proofing cabinet. The proofing cabinet comprises at least one light source for radiating blue light at a wavelength that ranges between 400 to 480 nanometres to stimulate baking yeast in the dough for reducing the proofing time and to control the growth of microorganisms. The system further comprises
- reflective surfaces on an interior surface of the proofing cabinet, wherein the reflective surfaces provide a uniform blue light inside the proofing cabinet;
- a humidifier that supplies steam for maintaining a relative humidity inside the proofing cabinet that ranges between 60 to 95 percent; and
- a microcontroller that is communicatively connected to the at least one light source and the humidifier, wherein the microcontroller is configured to adjust the intensity of the blue light to disinfect the proofing cabinet based on light sensor data measured from the disinfected surface of the proofing cabinet, wherein the intensity of the blue light inside the proofing cabinet is maintained at between 10 to 120 milliwatts per square centimetre during the disinfection cycle.

The present system thus reduces the proofing time of the dough using blue light by increasing the activity of yeast, and simultaneously slowing down the growth of microorganisms in the proofing system. The proofing cabinet may be adapted for home use or industrial use. The proofing cabinet may be a closed cabinet. The proofing cabinet may comprise darkened plexiglass windows to restrict extrinsic radiation. The proofing system in the present disclosure comprises the proofing cabinet but also various other parts that may be used, such as plates or conveyor belts. In the present description, when the term proofing cabinet is used, it is to be understood as encompassing all possible parts in connection to the cabinet.

In an embodiment, the at least one light source is a light emitting diode (LED). In another embodiment, a maximal distance at which the at least one light source is arranged to be located from an application area (e.g. area where the dough is placed) is determined based on an intensity of the blue light that is emitted by the at least one light source. The maximal distance at which the at least one light source is arranged to be located may be modified in order to maintain a desired light intensity inside the proofing cabinet. In one embodiment, the system may comprise a lamp assembly that comprises the at least one light source. In one particular embodiment, the at least one light source may be located at a minimum distance of 6 centimetre from the dough when the system is in use.

In an embodiment, a range of the wavelength of the blue light is optimally selected to stimulate the baking yeast in the dough for reducing the proofing time and for controlling the growth of micro-organisms. The humidifier may be controlled based on a size of the proofing cabinet, a desired relative humidity to be maintained inside the proofing cabinet and an amount of steam that is supplied into the proofing cabinet over a period of time.

According to another embodiment, the system further comprises at least one of
- at least one light sensor for detecting an intensity of light from a surface of the dough or a surface of the proofing cabinet;
- a humidity sensor for measuring a level of humidity inside the proofing cabinet;
- a temperature sensor for measuring a temperature inside the proofing cabinet; and
- an exhaust fan for maintaining the temperature inside the proofing cabinet under 46 degrees Celsius.

The system may thus comprise only one of the above, or any combination of the above listed components. For example, the system may comprise a light sensor and a humidity sensor or a light sensor and a temperature sensor or a light sensor and an exhaust fan. Likewise, the system may comprise a humidity sensor and a temperature sensor, a humidity sensor and an exhaust fan or a temperature sensor and an exhaust fan. Furthermore, the system may comprise a light sensor, a humidity sensor and a temperature sensor or a light sensor, and a temperature sensor, or a humidity sensor, an exhaust fan and a temperature sensor. In the most preferred embodiment, the system comprises all of the above, i.e. a light sensor, a temperature sensor, a humidity sensor and an exhaust fan.

The system may also comprise more than one of the above components, for example two, three, four or more light sensors and/or two, three, four or more humidity sensors and/or two, three, four or more temperature sensors and/or two, three, four or more exhaust fans.

The at least one light sensor may be arranged at top portion inside the proofing cabinet, the top portion being defined when the proofing cabinet is in use. The at least one light sensor may also be placed at the bottom of the proofing cabinet or at a level of plate that accommodates the dough. The least one light sensor may be arranged at any appropriate location inside the proofing cabinet to measure the light intensity from the surface of the dough. When more than one light sensor is used, they may be located at a similar level with respect to the height of the proofing cabinet or at different levels. For example, there may be one sensor in the top part, one in the bottom part and one in the middle part of the proofing cabinet. The at least one light sensor may be arranged at a height of the dough (i.e. a height at which the dough is placed for proofing) for measuring the light intensity (i.e. light sensor data) inside the proofing cabinet. The at least one light sensor may continuously detect the light intensity inside the proofing cabinet from the surface of the dough and the surface (e.g. disinfecting surface) of the proofing cabinet. The light sensor data may be measured to reflect the light intensity from the surface of the dough or the surface (i.e. disinfectant surface) of the proofing cabinet.

In one embodiment, the humidity sensor is placed near to the surface of the dough to measure the level of humidity inside the proofing cabinet.

The exhaust fan may maintain the temperature inside the proofing cabinet under a certain pre-set limit, which depends on the use of the proofing cabinet. For example, the pre-set limit may be 46 degrees Celsius. The exhaust fan limits the temperature by exhausting excessive hot air from the proofing cabinet. The exhaust fan may exhaust the hot air from the proofing cabinet when the temperature inside the proofing cabinet exceeds 46 degrees Celsius, as measured by the temperature sensor. This may be arranged to be performed automatically or manually by a user.

The system may further comprise a carbon dioxide sensor for measuring a level of carbon dioxide inside the proofing cabinet. The system may further measure a relative speed of a proofing cycle.

The system further comprises a microcontroller that is communicatively connected to the at least one light source and the humidifier. According to another embodiment, the microcontroller is communicatively connected to at least one of the at least one light sensor, the humidity sensor, the temperature sensor and the exhaust fan, wherein the microcontroller is configured to perform at least one of
- controlling an intensity of the blue light based on the light sensor data measured from the surface of the dough, wherein the intensity of the blue light is maintained between 0.5 to 50 milliwatts per square centimetre inside the proofing cabinet during a proofing cycle;
- controlling the humidifier based on the size of the proofing cabinet, a desired relative humidity to be maintained inside the proofing cabinet and an amount of steam that is supplied into the proofing cabinet over a period of time; and
- activating the exhaust fan when the temperature inside the proofing cabinet exceeds 46 degrees Celsius.

When a microcontroller is used, it is preferably communicatively connected to all of the different components of the system, in order to automatically control the use of the proofing cabinet or the entire proofing system.

According to this embodiment, the intensity of the blue light is maintained between 0.5 to 50 milliwatts per square centimetre. The intensity of the blue light may be maintained from 0.5, 1, 5, 7, 10, 15, 20, 25, 30, 35, 40 or 45 milliwatts per square centimetre up to 1, 5, 7, 10, 15, 20, 25, 30, 35, 40, 45 or 50 milliwatts per square centimetre. According to yet another embodiment, an intensity of the blue light is maintained, inside the proofing cabinet, at a level of about 30 milliwatts per square centimetre for activating the baking yeast. The intensity of the blue light inside the proofing cabinet may be controlled over a period of time, preferably by the microcontroller.

According to yet another embodiment, the wavelength of the blue light is between 405 to 480 nanometres. The wavelength of the blue light can be from 400, 405, 410, 415, 420, 425, 430, 435, 440, 445, 450, 455, 460, 465, 470 or 475 nanometres up to 405, 410, 415, 420, 425, 430, 435, 440, 445, 450, 455, 460, 465, 470, 475 or 480 nanometres.

According to yet another embodiment, the system further comprising at least one support for the dough made of a material that is transparent to the blue light. In one embodiment, the at least one support is a plate, a tray or a conveyor belt on which the dough is placed. The plate or the tray may be made of glass or another material that is transparent to the blue light.

According to yet another embodiment, the reflective surfaces are made of high diffuse reflectance aluminium composite. The reflective surfaces can also be made of any other suitable material, i.e. a material that has high enough reflectance and that is suitable for food industry-use, such as stainless steel.

According to yet another embodiment, the system further comprises a conveyor belt unit that guides the dough inside the proofing cabinet, wherein the conveyor belt unit comprises at least one sensor for collecting information about production speed and volume analytics during the proofing cycle. The information about production speed may comprise a speed of the system at which the dough is proofed. The information about volume analytics may comprise a quantity of the dough that is proofed over a period of time inside the proofing cabinet. The conveyor belt unit may run intermittently during the proofing cycle. The conveyor belt unit may comprise an automatically controlled conveyor belt with photoelectric sensors. In one embodiment, the conveyor belt unit is run through the proofing cabinet like an industrial static intermediate proofer or a spiral proofer.

The light source of the present system is used for stimulating baking yeast in a dough and to control the growth of micro-organisms. These micro-organisms can be present either in the dough or in the proofing cabinet, coming for example from outside air. The light source can thus be used, in addition to a proofing cycle, also during a disinfection cycle, while there may or may not be any dough present in the proofing cabinet. Preferably, there is no dough in the proofing cabinet while a disinfection cycle is running. The system may be automated in such a manner that it can sense when it is empty, i.e. without any dough, and can then run the disinfection cycle during this time. Thus, in one embodiment, the disinfection cycle is initiated or selected after removing the dough from the proofing cabinet. The microcontroller may increase the intensity of the blue light to disinfect the proofing cabinet.

During a disinfection cycle, the microcontroller is configured to adjust the intensity of the blue light to disinfect the proofing cabinet based on light sensor data measured from the disinfected surface of the proofing cabinet, wherein the intensity of the blue light inside the proofing cabinet is maintained at between 10 to 120 milliwatts per square centimetre during the disinfection cycle. According to yet another embodiment, the intensity of the blue light inside the proofing cabinet is maintained at between 50 to 120 milliwatts per square centimetre during the disinfection cycle. Typically, the intensity of light during the disinfection is higher than during production, i.e. during proofing of dough. The intensity of the blue light during the disinfection cycle may be maintained from 10, 15, 20, 25, 30, 35, 40, 45, 50, 55, 60, 65, 70, 75, 80, 85, 90, 95, 100, 105, 110 or 115 milliwatts per square centimetre up to 15, 20, 25, 30, 35, 40, 45, 50, 55, 60, 65, 70, 75, 80, 85, 90, 95, 100, 105, 110, 115 or 120 milliwatts per square centimetre.

According to yet another embodiment, the system further comprises an indicator of at least one of progress of the proofing cycle, progress of the disinfection cycle, a remaining time to finish the proofing cycle and a remaining time to finish the disinfection cycle. In one embodiment, the indicator is an electronic display.

According to yet another embodiment, the system further comprises a server communicatively connected to the microcontroller for providing a timing plan for adjusting the intensity of the blue light to disinfect the proofing cabinet (or the proofing system), wherein the server is optionally configured to monitor disinfection cycles and to store information related to the disinfection cycles in a server database. The server may be communicatively connected to the microcontroller through a network. The server may comprise the server database that is configured to store the timing plan. The timing plan may be pre-configured using the server. The timing plan is a function of a schedule based on which the intensity of the blue light is adjusted to disinfect the proofing cabinet. The timing plan may comprise a time period in a day at which the intensity of the blue light is to be adjusted to disinfect the proofing cabinet. The information related to the disinfection cycles may comprise a time taken by the system to disinfect the proofing cabinet, the intensity of blue light that is radiated inside the proofing cabinet etc.

The present disclosure also provides a method for reducing proofing time of dough and controlling growth of microorganisms in a proofing system, the method comprising
- radiating blue light at a wavelength that ranges between 400 to 480 nanometres, using at least one light source;
- providing uniform blue light inside the proofing cabinet, using reflective surfaces;
- supplying steam for maintaining a relative humidity inside the proofing cabinet between 60 to 95 percent, using a humidifier; and
- adjusting the intensity of the blue light to disinfect the proofing cabinet based on the light sensor data measured from the disinfected surface of the proofing cabinet during a disinfection cycle, using a microcontroller, wherein the intensity of the blue light inside the proofing cabinet is maintained at between 10 to 120 milliwatts per square centimetre during the disinfection cycle.

According to an embodiment, the method further comprises at least one of
- detecting an intensity of light from a surface of the dough or a surface of the proofing cabinet, using at least one light sensor;
- measuring a level of humidity inside the proofing cabinet, using a humidity sensor;
- measuring a temperature inside the proofing cabinet, using a temperature sensor; and
- maintaining the temperature inside the proofing cabinet under 46 degree Celsius, using an exhaust fan.

The method further comprises adjusting the intensity of the blue light to disinfect the proofing cabinet based on the light sensor data measured from the disinfected surface of the proofing cabinet during a disinfection cycle, using the microcontroller, wherein the intensity of the blue light inside the proofing cabinet is maintained at between 10 to 120 milliwatts per square centimetre during the disinfection cycle.

According to another embodiment, the method further comprises at least one of
- controlling an intensity of the blue light based on the light sensor data measured from the surface of the dough, using a microcontroller, wherein the intensity of the blue light is maintained between 0.5 to 50 milliwatts per square centimetre inside the proofing cabinet during a proofing cycle;
- controlling the humidifier based on the size of the proofing cabinet, a desired relative humidity to be maintained inside the proofing cabinet and an amount of steam that is supplied into the proofing cabinet over a period of time, using the microcontroller;
- activating the exhaust fan when the temperature inside the proofing cabinet exceeds 46 degree Celsius, using the microcontroller;
- providing a timing plan for adjusting the intensity of the blue light to disinfect the interior surface of the proofing cabinet, using a server; and
- monitoring disinfection cycles and storing information related to the disinfection cycles in a server database.

The advantages of the present method are thus identical to those disclosed above in connection with the present system and the embodiments listed above in connection with the system apply *mutatis mutandis* to the method. Thus, for example, any combination of steps listed above are possible and to be considered as disclosed in this description.

In an example embodiment, a proofing process is disclosed. Initially, dough may be guided into a proofing cabinet through a conveyor belt unit or may be manually placed inside the proofing cabinet. A proofing cycle may be selected from a menu provided in a screen attached to the proofing cabinet. A relative humidity inside the proofing cabinet may be adjusted using a humidifier, based on parameters (e.g. a temperature, a humidity level and a carbon dioxide level inside the proofing cabinet and a relative speed of the proofing cycle) of the selected proofing cycle. The relative humidity inside the proofing cabinet may be maintained using a system based on humidity sensor data. The humidity sensor data may be measured using a humidity sensor. The exhaust fan can be activated in order to maintain the temperature inside the proofing cabinet when the temperature inside the proofing cabinet exceeds a threshold limit (e.g. above 46 degree Celsius). Preferably, an intensity of blue light inside the proofing cabinet is controlled and measured throughout the proofing cycle. The intensity of the blue light inside the proofing cabinet may be measured using at least one light sensor. The proofing cycle may be ended according to desired parameters of the selected proofing cycle. In one embodiment, the proofing cycle is ended when a threshold value of the desired parameters is attained.

In another example embodiment, a disinfection process is disclosed. Initially, dough and visible dirt are removed from a proofing cabinet. In an embodiment, in conveyor type proofing cabinets, sensors that control a conveyor belt may be programmed to allow the conveyor belt to run only if the proofing cabinet is empty. The conveyor belt is activated and run throughout a disinfection cycle. The disinfection cycle may be selected from a menu provided in a screen attached to the proofing cabinet. An intensity of blue light inside the proofing cabinet can be controlled and measured throughout the disinfection cycle. The disinfection cycle may be ended when a desired light intensity at an application area of the proofing cabinet is attained. In one embodiment, the application area is an area or a cavity inside the proofing cabinet at which the dough is placed for proofing.

Embodiments of the present disclosure reduce the proofing time of the dough and control the growth of micro-organisms in the proofing system using the blue light. Embodiments of the present disclosure further activate the baking yeast using the blue light, thereby reducing the proofing time of the dough.

### DETAILED DESCRIPTION OF THE DRAWINGS

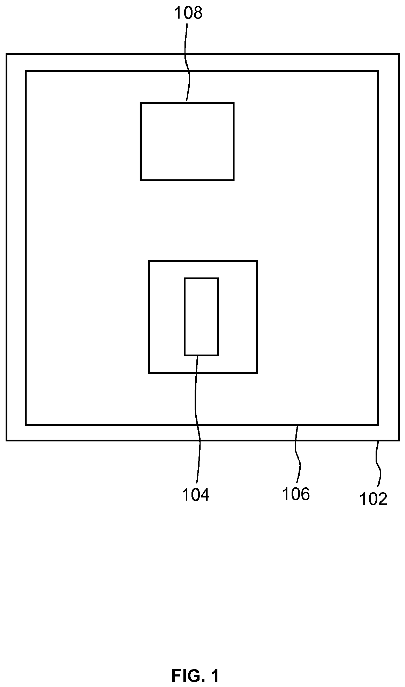

FIG. 1 is a schematic illustration of a system in accordance with an embodiment of the present disclosure. The system comprises a proofing cabinet **102**. The proofing cabinet **102** comprises at least one light source **104**, reflective surfaces **106** and a humidifier **108**. The functions of these parts as have been described above.

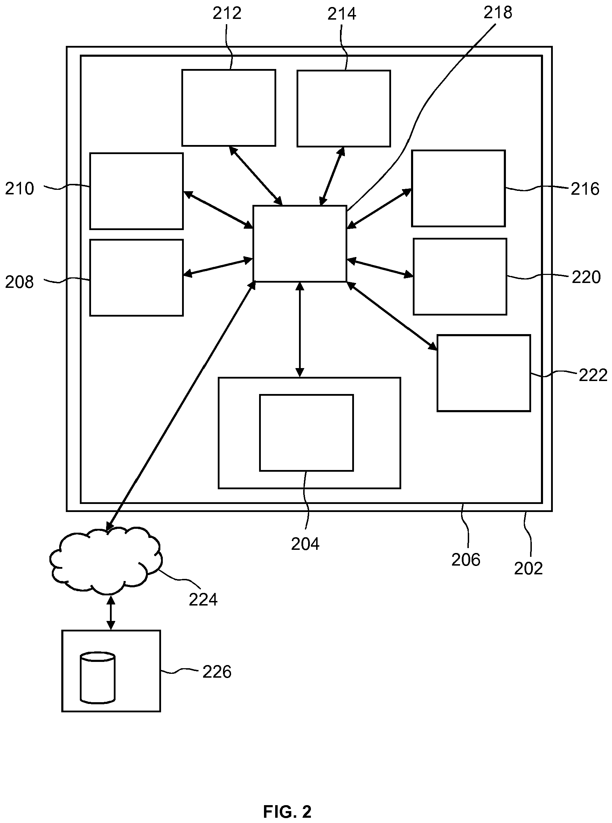

FIG. 2 is a schematic illustration of a system that comprises a microcontroller **218** and a server **226** in accordance with an embodiment of the present disclosure. The system comprises a proofing cabinet **202**. The proofing cabinet **202** comprises at least one light source **204**, reflective surfaces **206**, a humidifier **208**, at least one light sensor **210**, a humidity sensor **212**, a temperature sensor **214**, an exhaust fan **216**, the microcontroller **218**, an indicator **220**, a conveyor belt unit **222**, a network **224** and the server **226**. The functions of these parts as have been described above.

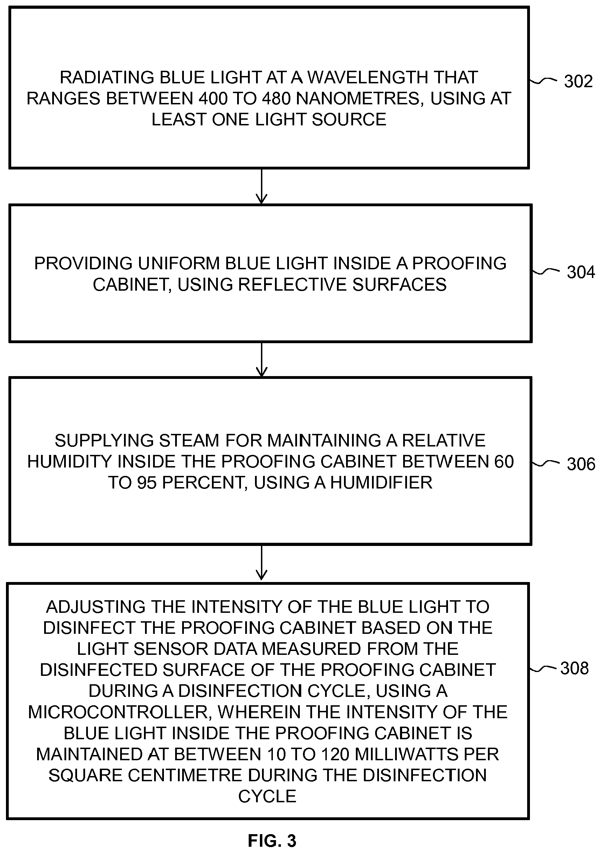

FIG. 3 is a flow diagram illustrating a method of reducing proofing time of dough and controlling growth of microorganisms in the dough, in a proofing cabinet, in accordance with an embodiment of the present disclosure. At step **302**, blue light at a wavelength that ranges between 400 to 480 nanometres is radiated using at least one light source. At step **304,** a uniform blue light is provided inside a proofing cabinet using reflective surfaces. At step **306**, the steam is supplied using a humidifier for maintaining a relative humidity inside the proofing cabinet between 60 to 95 percent. At step **308**, the intensity of the blue light to disinfect the proofing cabinet is adjusted based on the light sensor data measured from the disinfected surface of the proofing cabinet during a disinfection cycle, using a microcontroller, wherein the intensity of the blue light inside the proofing cabinet is maintained at between 10 to 120 milliwatts per square centimetre during the disinfection cycle.

Modifications to embodiments of the present disclosure described in the foregoing are possible without departing from the scope of the present disclosure as defined by the accompanying claims. Expressions such as "including", "comprising", "incorporating", "have", "is" used to describe and claim the present disclosure are intended to be construed in a non-exclusive manner, namely allowing for items, components or elements not explicitly described also to be present. Reference to the singular is also to be construed to relate to the plural.

## Claims

1. A system for reducing proofing time of dough and controlling growth of microorganisms in a proofing system, the system comprising a proofing cabinet (102, 202) comprising
- at least one light source (104, 204) for radiating blue light at a wavelength that ranges between 400 to 480 nanometres to stimulate baking yeast in the dough for reducing the proofing time and to control the growth of microorganisms;
**characterised in that** the system comprises
- reflective surfaces (106, 206) on an interior surface of the proofing cabinet, wherein the reflective surfaces provide a uniform blue light inside the proofing cabinet;
- a humidifier (108, 208) that supplies steam for maintaining a relative humidity inside the proofing cabinet that ranges between 60 to 95 percent; and
- a microcontroller (218) that is communicatively connected to the at least one light source and the humidifier, wherein the microcontroller is configured to adjust the intensity of the blue light to disinfect the proofing cabinet based on light sensor data measured from the disinfected surface of the proofing cabinet, wherein the intensity of the blue light inside the proofing cabinet is maintained at between 10 to 120 milliwatts per square centimetre during the disinfection cycle.

2. A system according to claim 1, wherein the system further comprises at least one of
- at least one light sensor (210) for detecting an intensity of light from a surface of the dough or a surface of the proofing cabinet (102, 202);
- a humidity sensor (212) for measuring a level of humidity inside the proofing cabinet;
- a temperature sensor (214) for measuring a temperature inside the proofing cabinet; and
- an exhaust fan (216) for maintaining the temperature inside the proofing cabinet under 46 degrees Celsius.

3. A system according to claim 1 or 2, wherein the microcontroller (218) is further communicatively connected to at least one of the at least one light sensor (210), the humidity sensor (212), the temperature sensor (214) and the exhaust fan (216), wherein the microcontroller is configured to perform at least one of
- controlling an intensity of the blue light based on the light sensor data measured from the surface of the dough, wherein the intensity of the blue light is maintained between 0.5 to 50 milliwatts per square centimetre inside the proofing cabinet (102, 202) during a proofing cycle;
- controlling the humidifier (108, 208) based on the size of the proofing cabinet, the desired relative humidity to be maintained inside the proofing cabinet and the amount of steam that is supplied into the proofing cabinet over a period of time; and
- activating the exhaust fan when the temperature inside the proofing cabinet exceeds 46 degrees Celsius.

4. A system according to claim 3, wherein an intensity of the blue light is maintained, inside the proofing cabinet (102, 202), at a level of about 30 milliwatts per square centimetre for activating the baking yeast.

5. A system according to any of the preceding claims, wherein the wavelength of the blue light is between 405 to 480 nanometres.

6. A system according to any of the preceding claims, further comprising at least one support for the dough made of a material that is transparent to the blue light.

7. A system according to any of the preceding claims, wherein the reflective surfaces (106, 206) are made of high diffuse reflectance aluminium composite.

8. A system according to any of the preceding claims, wherein the system further comprises a conveyor belt unit (222) that guides the dough inside the proofing cabinet (102, 202), wherein the conveyor belt unit comprises at least one sensor for collecting information about production speed and volume analytics during the proofing cycle.

9. A system according to claim 1, wherein the intensity of the blue light inside the proofing cabinet (102, 202) is maintained at between 50 to 120 milliwatts per square centimetre during the disinfection cycle.

10. A system according to claim any of the preceding claims, wherein the system further comprises an indicator (220) of at least one of progress of the proofing cycle, progress of the disinfection cycle, a remaining time to finish the proofing cycle and a remaining time to finish the disinfection cycle.

11. A system according to any of the preceding claims, further comprising a server (226) communicatively connected to the microcontroller (218) for providing a timing plan for adjusting the intensity of the blue light to disinfect the proofing cabinet (102, 202), wherein the server is optionally configured to monitor disinfection cycles and to store information related to the disinfection cycles in a server database.

12. A method for reducing proofing time of dough and controlling growth of microorganisms in a proofing system, the method comprising
- radiating blue light at a wavelength that ranges between 400 to 480 nanometres, using at least one light source (104, 204);
**characterised in that** the method comprises
- providing uniform blue light inside the proofing cabinet (102, 202), using reflective surfaces (106, 206);
- supplying steam for maintaining a relative humidity inside the proofing cabinet between 60 to 95 percent, using a humidifier (108, 208); and
- adjusting the intensity of the blue light to disinfect the proofing cabinet based on the light sensor (210) data measured from the disinfected surface of the proofing cabinet during a disinfection cycle, using a microcontroller (218), wherein the intensity of the blue light inside the proofing cabinet is maintained at between 10 to 120 milliwatts per square centimetre during the disinfection cycle.

13. A method according to claim 12, wherein the method further comprises at least one of
- detecting an intensity of light from a surface of the dough or a surface of the proofing cabinet (102, 202), using at least one light sensor (210);
- measuring a level of humidity inside the proofing cabinet, using a humidity sensor (212);
- measuring a temperature inside the proofing cabinet, using a temperature sensor (214); and
- maintaining the temperature inside the proofing cabinet under 46 degree Celsius, using an exhaust fan (216).

14. A method according to claim 12 or 13, wherein the method further comprises at least one of
- controlling an intensity of the blue light based on the light sensor (210) data measured from the surface of the dough, using a microcontroller (218), wherein the intensity of the blue light is maintained between 0.5 to 50 milliwatts per square centimetre inside the proofing cabinet (102, 202) during a proofing cycle;
- controlling the humidifier (108, 208) based on the size of the proofing cabinet, a desired relative humidity to be maintained inside the proofing cabinet and an amount of steam that is supplied into the proofing cabinet over a period of time, using the microcontroller;
- activating the exhaust fan (216) when the temperature inside the proofing cabinet exceeds 46 degree Celsius, using the microcontroller;
- providing a timing plan for adjusting the intensity of the blue light to disinfect the interior surface of the proofing cabinet, using a server; and
- monitoring disinfection cycles and storing information related to the disinfection cycles in a server database.
